# EUROPÄISCHE PATENTSCHRIFT

(11) **EP 0 592 874 B1**
(45) Veröffentlichungstag und Bekanntmachung des Hinweises auf die Patenterteilung: **17.02.1999**
(21) Anmeldenummer: 93115780.4
(22) Anmeldetag: 30.09.1993
(51) Int. Cl.: H04B 10/14

(54) **Integrierter optischer Polarisationsdiversity-Empfänger mit 3dB Koppler und zwei Polarisationsteilern**
Integrated optical polarization diversity receiver with 3dB coupler and two polarization splitters
Récepteur à diversité de polarisation avec coupleur 3dB et deux séparateurs de polarisation

(30) Priorität: 13.10.1992 DE 4234485
(43) Veröffentlichungstag der Anmeldung: 20.04.1994
(73) Patentinhaber: ROBERT BOSCH GMBH, 70442 Stuttgart (DE)
(72) Erfinder: Schwander, Thomas, Dipl.-Ing., D-71522 Backnang (DE)

(56) Entgegenhaltungen:
- EP-A- 0 350 110
- APPLIED PHYSICS LETTERS., Bd.56, Nr.21, 21. Mai 1990, NEW YORK US Seiten 2092 - 2093 SHANI ET AL.
- PROC. OF THE 17. EUROPEAN CONF. ON OPTICAL COMMUNICATION, Bd.1, 9. September 1991, PARIS, FR Seiten 189 - 192 HEIDRICH ET AL.
- IEEE PHOTONICS TECHNOLOGY LETTERS, Bd.2, Nr.2, Februar 1990, NEW YORK Seite 114-115 ALBRECHT ET AL.
- FREQUENZ, Bd.45, Nr.9/10, September 1991, BERLIN DE Seiten 221 - 224 SCHWANDER ET AL.
- JOURNAL OF LIGHTWAVE TECHNOLOGY., Bd.10, Nr.10, Oktober 1992, NEW YORK US Seiten 1334 - 1337 THYAGARAJAN ET AL.

## Beschreibung

Die Erfindung betrifft eine Vorrichtung mit zwei optischen Eingängen und vier optischen Ausgängen, insbesondere für optischen Polarisationsdiversity-Empfang, zum Zusammenführen von zwei optischen Eingangssignalen in einem Koppler und zum Zerlegen der beiden entstandenen Signale in ihre Anteile mit orthogonalen Polarisationen in zwei Polarisationsweichen, sowie einen Polarisationsdiversity-Empfänger für den optischen Überlagerungsempfang mit einer obigen Vorrichtung.

Beim Polarisationsdiversity-Empfang wird das optische Eingangssignal in zwei Signale mit orthogonaler Polarisation, beispielsweise in das linear horizontal und das linear vertikal polarisierte zerlegt. Jedes Signal wird dann für sich durch Überlagerungsempfang auf eine Zwischenfrequenz bzw. ins Basisband umgesetzt. Es folgt dann eine elektronische Kombination der entstandenen Signale.

In APPLIED PHYSICS LETTERS, Bd. 56, Nr. 21, Mai 1990, New York, US, Seiten 2092-2093; Y. SHANI et al. ist eine Eingangsstufe eines Polarisationsdiversity-Empfängers beschrieben, die sich integrieren läßt.

Ein optischer Polarisationsdiversity-Empfänger ist schematisch in Figur 3 dargestellt. Eine solcher Polarisationsdiversity-Empfänger ist beispielsweise aus der DE 38 09 395 A1 bekannt. Es ist ein Eingang ES für das optische Eingangssignal vorgesehen, der mit dem ersten Anschluß eines optischen 3 dB-Strahlteilers T1 verbunden ist. Der weitere Anschluß dieses Teilers ist mit einem lokalen Laser LL verbunden. Die beiden Ausgänge des 3 dB-Strahlteilers sind jeweils mit einer Polarisationsweiche TETM1, TETM2 verbunden. In diesen wird ein Signal in zwei Signale mit zueinander orthogonaler Polarisation zerlegt. Die optischen Ausgänge der Polarisationsweichen TETM1, TETM 2 sind jeweils mit einer Fotodiode D1, D2, D3, D4 verbunden. In diesen erfolgt die optoelektrische Signalumformung. An den Ausgängen A'1, A'2, A'3, A'4 der Fotodioden D1, D2, D3, D4 stehen also entsprechende elektrische Ausgangssignale an, die einem nachgeschalteten elektrischen Signalverarbeitungsteil zugeordnet werden. In dem 3 dB-Strahlteiler T1 wird das Licht des lokalen Lasers LL mit dem Eingangssignal zusammengeführt. In den nachgeschalteten Polarisationsweichen TETM1, TETM2 findet dann eine Zerlegung in zueinander orthogonal polarisierte Anteile statt. Es ist dabei wichtig, daß der lokale Laser Licht liefert, das zumindest annähernd zu gleichen Anteilen in den beiden Polarisationsrichtungen polarisiert ist. Ansonsten wird noch ein Polarisationskonverter benötigt.

Aus der DE 31 08 742 C2 ist ein selektiver Richtkoppler bekannt, der als 3 dB-Koppler eingesetzt werden kann. Er besteht aus zwei miteinander zu verkoppelnden planaren Wellenleitern, zwischen denen ein Zwischenwellenleiterabschnitt derart angeordnet ist, daß die Koppelwelle des Zwischenwellenleiterabschnittes bei der gewünschten Koppel frequenz phasensynchron mit den Wellen in den beiden anderen Wellenleitern ist und daß die beiden zu verkoppelnden Wellenleiter jeweils nur mit dem Zwischenwellenleiterabschnitt verkoppelt sind. Genauere Angabe über die Dimensionierung des Richtkopplers sind aus der DE 31 08 742 C2 zu entnehmen.

In der EP-A-0 350 110 ist eine integrierte Polarisationsweiche beschrieben, die aus zwei Wellenleitern mit einem Zwischenwellenleiterabschnitt besteht, wobei die Wellenleiter jeweils nur mit dem zugehörigen Zwischenwellenleiterabschnitt koppeln und eine Koppelwelle des Zwischenwellenleiterabschnitts bei der gewünschten Koppel frequenz phasensynchron mit den Wellen in den beiden zugehörigen Wellenleitern ist; dabei ist der Zwischenwellenleiterabschnitt von einer Beschichtung aus einem leitenden Material überdeckt. Hier sind die Wellenleiter in einem so geringen Abstand angeordnet, daß sie laufend miteinander koppeln. Die TM-Welle koppelt von einem Wellenleiter zum anderen und wieder zurück, um das polarisationsselektive Verhalten zu erreichen. Die Polarisationsteilung entsteht durch Dämpfung der TM-Welle.

Es ist Aufgabe der Erfindung eine Vorrichtung mit zwei optischen Eingängen und vier optischen Ausgängen zum Zusammenführen von zwei optischen Eingangssignalen und zum Zerlegen der beiden entstandenen Signale in ihre Anteile mit orthogonalen Polarisationen anzugeben, die sehr einfach aufgebaut und kompakt ist. Außerdem ist es Aufgabe der Erfindung einen Polarisationsdiversity-Empfänger anzugeben, der diese Vorrichtung verwendet.

Die Aufgabe wird bezüglich der Vorrichtung mit den Merkmalen des Patentanspruches 1 gelöst. Vorteilhafte Weiterbildungen der Vorrichtung sind in den Unteransprüchen 2 bis 6 angegeben. Bezüglich des Polarisationsdiversity-Empfängers wird die Aufgabe mit den Merkmalen des Patentanspruches 7 gelöst. Eine vorteilhafte Ausgestaltung ist im Patentanspruch 8 angegeben.

Die erfindungsgemäße Vorrichtung besteht aus drei 3-Wellenleiter-Kopplern. Jeder dieser Koppler weist die Merkmale und Eigenschaften auf, die von einem selektiven Richtkoppler gemäß der DE 31 08 742 C2 und der DE 41 11 095 C1 bekannt sind. Zusätzlich weisen zwei der 3-Wellenleiter-Koppler eine Beschichtung aus einem leitenden Material, z.B. aus Metall, auf, die zumindest den mittleren planaren Zwischenwellenleiterabschnitt zu großen Teilen überdeckt. Diese Beschichtung bewirkt, daß das effektive Brechungsindex im mittleren Wellenleiterabschnitt für EH-Wellen stark abgesenkt ist. Der effektive Brechungsindex im mittleren Wellenleiterabschnitt für HE-Wellen wird dagegen durch die leitende Beschichtung kaum verändert. Somit ergibt sich, daß bei einem zufällig polarisierten optischen Signal, das am Eingang eines solchen Kopplers anliegt, die EH-Wellen vom ersten Wellenleiter kaum auf den Zwischenwellenleiterabschnitt überkoppeln, während die HE-Wellen nahezu vollständig auf diesen und von da auf den zweiten Wellenleiter überkoppeln. Hinter dem Koppler, den man auch als Polarisationsweiche bezeichnen kann, befindet sich also ein Signal erster Polarisation (EH-Wellen) auf dem ersten Wellenleiter und ein Signal zweiter Polarisation (HE-Wellen) auf dem zweiten Wellenleiter. Die Polarisationsweiche weist eine geringe Durchgangsdämpfung und eine große laterale Trennung der Ausgangswellenleiter auf. Es wird ermöglicht Bauelemente direkt hinter den Kopplern anzuordnen, ohne die Wellenleiter weiter auseinander zu führen. Auf Wellenleiterkrümmungen kann also weitgehend verzichtet werden. Eine kompakte Integration der Vorrichtung mit optoelektronischen Bauelementen auf einem Chip wird ermöglicht. Wenn die Beschichtung nur den mittleren Zwischenwellenleiterabschnitt überdeckt, z.B. deckungsgleich zu diesem ist, so ist ein symmetrischer Aufbau der Polarisationsweiche möglich. Die Herstellung einer symmetrischen Struktur erlaubt hohe Fertigungstoleranzen, was für die Herstellung von Vorteil ist. Ein Vertauschen der Ein- und Ausgänge wird ermögicht, was zu hoher Flexibilität führt.

Eine besonders hohe Polarisationstrennung ist zu erwarten, wenn auch der zweite Wellenleiter der Polarisationsweiche im Koppelbereich von der Beschichtung überdeckt wird. Dadurch entsteht eine kaskadierte Anordnung.

Die Anordnung der Koppler hintereinander sieht so aus, daß die beiden Wellenleiter des ersten Kopplers, der als 3 dB-Koppler wirkt, jeweils als ein Eingangswellenleiter der Polarisationsweichen weitergeführt wird. Eine besonders kompakte Anordnung ist zu erreichen, wenn der Zwischenwellenleiterabschnitt der Polarisationsweichen beginnt sobald der Zwischenwellenleiterabschnitt des 3 dB-Kopplers endet. Sogar eine geringfügige Verschachtelung erscheint möglich.

Die Vorrichtung zum Zusammenführen von zwei optischen Eingangssignalen und zum Zerlegen der beiden entstandenen Signale in ihrer Anteile mit orthogonalen Polarisationen ist besonders geeignet zum Einsatz beim optischen Polarisationsdiversity-Empfang. Dazu wird an einen der Eingänge des Kopplers das optische Eingangssignal angelegt. Der zweite Wellenleiter des Kopplers ist mit einem lokalen Laser verbunden. Die vier Ausgänge der Vorrichtung sind jeweils mit einer Fotodiode verbunden, denen eine elektrische Signalverarbeitung nachgeschaltet ist. Die Vorrichtung aus dem Koppler und den beiden Polarisationsweichen kann gemeinsam mit dem Laser und den Fotodioden auf einem Substrat monolitisch integriert werden. Die Integration ist dabei besonders kompakt und Wellenleiterkrümmungen werden vermieden. Auch wenn ein Polarisationskonverter vorgesehen ist, ist eine monolithische Integration möglich.Aufgrund der sehr geringen Abmessungen der gesamten Anordnung und der symmetrischen Ausgestaltung der Anordnung sind Laufzeitunterschiede zwischen den Signalen der einzelnen Dioden vernachlässigbar klein. Der Einsatz der 3-Wellenleiter-Koppler ermöglicht einen besonders einfachen Aufbau. Die Gesamtlänge der Anordnung reduziert sich von mehreren cm auf ungefähr 3 mm. Die Verwendung sehr ähnlicher Bauelemente für den 3 dB-Koppler und die Polarisationsweichen macht die Vorrichtung besonders fertigungsfreundlich.

Ausführungsbeispiele der Erfindung werden anhand der Zeichnungen erläutert. Es zeigen:
Fig. 1 eine Polarisationsweiche in Querschnitt und Aufsicht,
Fig. 2 eine Aufsicht auf einen Polarisationsdiversity-Empfänger,
Fig. 3 eine bekannte Anordnung eines Polarisationsdiversity-Empfängers und
Fig. 4 eine erfindungsgemäße Vorrichtung.

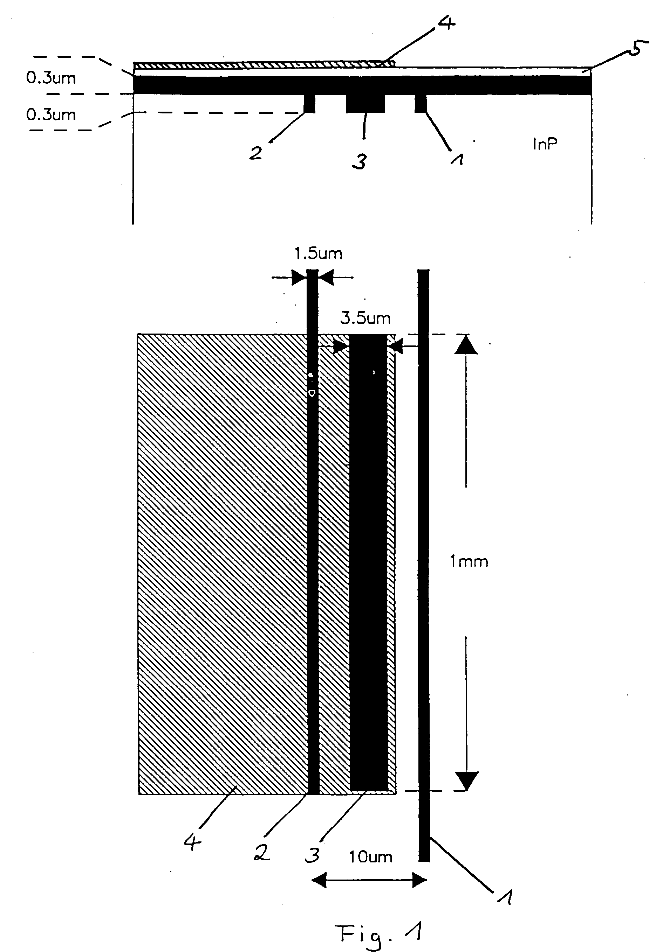

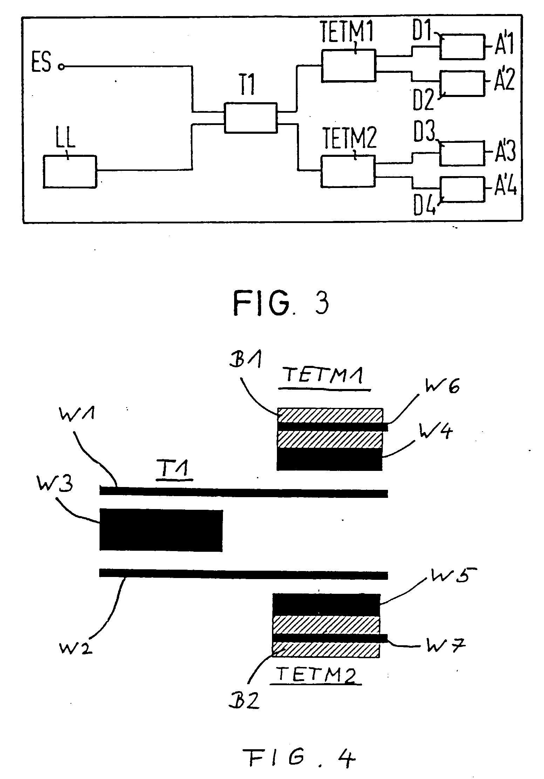

In Fig. 1 ist eine Polarisationsweiche mit vergrabenen Rippenwellenleitern zu sehen. Ein erster Rippenwellenleiter 1 und ein zweiter Rippenwellenleiter 2, die jeweils 1,5 µm breit sind, sind in einem Abstand von 10 µm nebeneinander angeordnet. Zwischen ihnen befindet sich der dritte Zwischenwellenleiterabschnitt 3, der 3,5 µm breit ist. Der Koppelbereich und somit auch der dritte Zwischenwellenleiterabschnitt 3 sind 1 mm lang. Koppelt man in den ersten Wellenleiter 1 ein Eingangssignal mit EH-Wellen und HE-Wellen ein, so wird die EH-Welle auch hinter dem Koppelbereich weiterhin im ersten Wellenleiter 1 geführt, während die HE-Welle auf den zweiten Wellenleiter 2 überkoppelt. Im in Fig.1 angegebenen Beispiel ist nicht nur der Zwischenwellenleiterabschnitt 3 von der Metallschicht 4, z.B. gold abgedeckt, sondern auch der zweite Wellenleiter 2. Dadurch wird eine Überkopplung der EH-Welle auf den zweiten Wellenleiter aufgrund der kaskadierten Anordnung noch stärker vermieden. Zwischen der Metallschicht 4 und den Wellenleitern 2,3 befindet sich eine Pufferschicht 5. Die Polarisationsweiche ist in III/V-Halbleitertechnik, hier InP/InGaAsP-Technik realisiert. Eine Realisierung in InP/InGaAlAs oder GaAs/GaAlAs ist ebenfalls möglich. Die Dicke des Films und der Rippen beträgt jeweils 0,3 µm. In Fig. 4 ist der Einsatz einer solchen Polarisationsweiche TETM1, TETM2 in einer erfindungsgemäßen Vorrichtung dargestellt. Der 3 dB-Koppler T1 besteht aus zwei planaren Wellenleitern W1 und W2 sowie einem Zwischenwellenleiterabschnitt W3. Die planaren Wellenleiter W1, W2 werden hinter dem Koppler T1 weitergeführt und bilden die Eingangswellenleiter der Polarisationsweichen. Die Polarisationsweichen TETM1, TETM2 weisen jeweils einen Zwischenwellenleiterabschnitt W4, W5 und einen zweiten Wellenleiter W6, W7 auf. Die Zwischenwellenleiterabschnitte W4, W5 und der zweite Wellenleiter W6, W7 sind im Koppelbereich der Polarisationsweichen TETM1, TETM2 jeweils mit einer Metallschicht B1, B2 versehen. In dem 3 dB-Koppler T1 werden die über die Wellenleiter W1 und W2 eingehenden Signale mit Hilfe des Zwischenwellenleiterabschnittes W3 zusammengeführt und gleichmäßig auf den Wellenleitern W1 und W2 ausgegeben. Die so erzeugten Signale werden jeweils einer Polarisationsweiche TETM1 bzw. TETM2 zugeführt, in der sie in jeweils zwei Signale unterschiedlicher Polarisationsrichtungen (HE-Wellen und EH-Wellen) zerlegt werden. Hinter dem Koppelbereich der Polarisationsweichen TETM1 und TETM2 befindet sich also auf den vier Wellenleitern W1, W2, W6, W7 jeweils ein Mischsignal in einer Polarisationsrichtung (EH-Wellen auf W1 und W2, HE-Wellen auf W6 und W7).

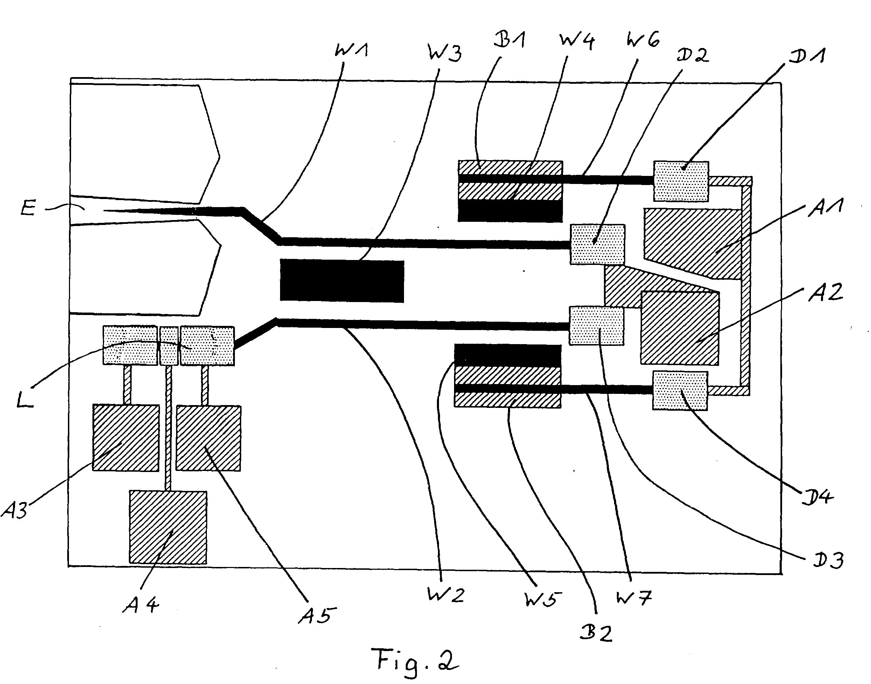

Die eben beschriebene Vorrichtung kann in einem Polarisationsdiversity-Empfänger wie in Fig. 2 angegeben eingesetzt werden. Ein Wellenleiter W1 des 3 dB-Kopplers ist mit einem Eingang E für das optische Eingangssignal verbunden. Da an diesem Eingang E zumeist eine Glasfaser angeschlossen wird, ist ein Wellenleiterübergang zur Feldanpassung zwischen den integrierten Lichtwellenleitern mit den sehr geringen Abmessungen und der wesentlich größeren Glasfaser vorgesehen. Ein solcher Wellenleiterübergang ist beispielsweise aus der DE 41 11 095 C1 bekannt. Der zweite Wellenleiter des Kopplers W2 ist mit einem Laser L verbunden. Als Lokaloszillator wird hier ein Mehrsegmentlaser L eingesetzt. Die Ausgänge der erfindungsgemäßen Vorrichtung sind jeweils mit einer Diode D1 bis D4 verbunden. Die Dioden D1 und D3 weisen einen gemeinsamen Anschluß A2 und die Dioden D1 und D4 einen gemeinsamen Anschluß A1 auf. Den so zusammengeschalteten Dioden D3 und D2 bzw. D1 und D4 wird jeweils Licht der gleichen Polarisation zugeführt. Auch die einzelnen Segmente des Lasers sind mit Anschlüssen A3, A4 und A5 versehen. Über diese Anschlüsse findet eine Verbindung mit der Lasersteuerung einerseits und mit der nachgeschaltete elektrischen Signalverarbeitung andererseits statt.

Sämtliche Wellenleiter W1 bis W7, die Dioden D1 bis D4 und der Laser L können gemeinsam auf einen Substrat monolitisch integriert werden. Zur Herstellung ist dann kaum Justieraufwand notwendig. Die Justage erfolgt im Herstellungsprozeß. Außerdem kann eine Vielfalt gleicher Komponenten in einem Arbeitsgang hergestellt werden. Das Materialsystem InP/InGaAsP bietet die Möglichkeit der monolitischen Integration optischer und elektronischer Bauelemente im für die optische Nachrichtenübertragung interessanten Wellenlängenbereich von 1,3 bis 1,55 µm. Es werden vergrabene Wellenleiter eingesetzt, da die Polarisationsabhängigkeit des 3 dB-Kopplers dadurch sehr stark herabgesetzt werden kann. Die vorliegende Lösung ist ungefähr 3 mm lang und 50 µm breit.

## Patentansprüche

1. Vorrichtung mit zwei optischen Eingängen und vier optischen Ausgängen, insbesondere für optischen Polarisationsdiversity-Empfang, zum Zusammenführen von zwei optischen Eingangssignalen in einem Koppler und zum Zerlegen der beiden entstandenen Signale in ihre Anteile mit orthogonalen Polarisationen in zwei Polarisationsweichen, wobei die Polaristationsweichen (TETM1, TETM2) und der Koppler (T1) jeweils aus zwei Wellenleitern (W1, W2, W6, W7) bestehen und jeweils einer der Wellenleiter (W1, W2) des Kopplers (T1) als Eingangswellenleiter einer Polarisationsweiche (TETM1, TETM2) dient, dadurch gekennzeichnet,
daß jeweils zwischen den beiden Wellenleitern (W1, W2, W6, W7) des Kopplers (T1) bzw. der Polarisationsweichen (TETM1, TETM2) ein Zwischenwellenleiterabschnitt (W3 bzw. W4 bzw. W5) angeordnet ist,
daß die Wellenleiter (W1, W2, W6, W7) jeweils nur mit dem zugehörigen Zwischenwellenleiterabschnitt (W3, W4, W5) koppeln,
daß eine Koppelwelle eines Zwischenwellenleiterabschnitts (W3, W4, W5) bei der gewünschten Koppelfrequenz phasensynchron mit den Wellen in den beiden zugehörigen Wellenleitern (W1, W2, W6, W7) ist,
daß die Zwischenwellenleiterabschnitte und der zweite Wellenleiter (W6, W7) der Polarisationsweichen von einer Beschichtung (B1, B2) aus einem leitenden Material überdeckt sind.

2. Vorrichtung nach Anspruch 1, dadurch gekennzeichnet, daß die Zwischenwellenleiterabschnitte (W4, W5) der Polarisationsweichen und jeweils ein weiterer Wellenleiter (W6, W7) und der dazwischenliegende Bereich von einer Beschichtung (B1, B2) aus einem leitenden Material überdeckt sind.

3. Vorrichtung nach einem der Ansprüche 1 oder 2, dadurch gekennzeichnet, daß zwischen den Wellenleitern (1, 2; W6, W7) und der Beschichtung (4; B1, B2) eine Pufferschicht (5) vorgesehen ist.

4. Vorrichtung nach einem der Ansprüche 1 bis 3, dadurch gekennzeichnet, daß die Wellenleiter (W1 bis W7) gerade geführt sind.

5. Vorrichtung nach einem der Ansprüche 1 bis 4, dadurch gekennzeichnet, daß die Beschichtung (B1, B2) aus Metall besteht.

6. Vorrichtung nach einem der Ansprüche 1 bis 5, dadurch gekennzeichnet, daß die Wellenleiter (W1 bis W7) in III/V-Halbleitertechnik, insbesondere InP/InGaAsP-Technik, monolithisch integriert sind.

7. Polarisations-Diversity-Empfänger für den optischen Überlagerungsempfang mit einer Vorrichtung mit zwei optischen Eingängen und vier optischen Ausgängen, die zum Zusammenführen von zwei optischen Eingangssignalen in einem Koppler und zum Zerlegen der beiden entstandenen Signale in ihre Anteile mit orthogonalen Polarisationen in zwei Polarisationsweichen dient, wobei die Polarisationsweichen (TETM1, TETM2) und der Koppler (T1) jeweils aus zwei Wellenleitern (W1, W2, W6, W7) bestehen und jeweils einer der Wellenleiter (W1, W2) des Kopplers (T1) als Eingangswellenleiter einer Polarisationsweiche (TETM1, TETM2) dient, sowie ein planarer Wellenleiter (W1) des Kopplers mit einem Eingang (E) für das optische Eingangssignal verbunden ist, der zweite Wellenleiter (W2) des Kopplers mit einem lokalen Laser (L) verbunden ist, die Ausgänge (W1, W2, W6, W7) der Vorrichtung jeweils mit einer Photodiode (D1 bis D4) verbunden sind, den Photodioden (D1 bis D4) eine elektrische Signalverarbeitung nachgeschaltet ist, dadurch gekennzeichnet, daß jeweils zwischen den beiden Wellenleitern (W1, W2, W6, W7) des Kopplers (T1) bzw. der Polarisationsweichen (TETM1, TETM2) ein Zwischenwellenleiterabschnitt (W3 bzw. W4 bzw. W5) angeordnet ist,
daß die Wellenleiter (W1, W2, W6, W7) jeweils nur mit dem zugehörigen Zwischenwellenleiterabschnitt (W3, W4, W5) koppeln,
daß eine Koppelwelle eines Zwischenwellenleiterabschnitts (W3, W4, W5) bei der gewünschten Koppelfrequenz phasensynchron mit den Wellen in den beiden zugehörigen Wellenleitern (W1, W2, W6, W7) ist,
daß die Zwischenwellenleiterabschnitte und der zweite Wellenleiter (W6, W7) der Polarisationsweichen von einer Beschichtung (B1, B2) aus einem leitenden Material überdeckt sind.

8. Polarisationsdiversity-Empfänger nach Anspruch 7, dadurch gekennzeichnet, daß die Vorrichtung, der Laser (L) und die Photodioden (D1 bis D4) gemeinsam auf einem Substrat monolithisch integriert sind.

## Claims

1. Apparatus having two optical inputs and four optical outputs, in particular for optical polarisation diversity reception, for combining two optical input signals in a coupler and for splitting the two resultant signals into their components with orthogonal polarisation in two polarisation splitters, the polarisation splitters (TETM1, TETM2) and the coupler (T1) each comprising two waveguides (W1, W2, W6, W7), and one of the waveguides (W1, W2) of the coupler (T1) in each case being used as an input waveguide for a polarisation splitter (TETM1, TETM2), characterized in that an intermediate waveguide section (W3, W4 or W5, respectively) is arranged between each of the two waveguides (W1, W2, W6, W7) of the coupler (T1) and of the polarisation splitters (TETM1, TETM2), in that the waveguides (W1, W2, W6, W7) each provide coupling only to the associated intermediate waveguide section (W3, W4, W5), in that a coupled wave in an intermediate waveguide section (W3, W4, W5) at the desired coupling frequency is synchronised in phase with the waves in the two associated waveguides (W1, W2, W6, W7), and in that the intermediate waveguide sections and the second waveguide (W6, W7) in the polarisation splitters are covered by a coating (B1, B2) of a conductive material.

2. Apparatus according to Claim 1, characterized in that the intermediate waveguide sections (W4, W5) in the polarisation splitters and in each case one further waveguide (W6, W7) and the intermediate region are covered by a coating (B1, B2) of a conductive material.

3. Apparatus according to one of Claims 1 or 2, characterized in that a buffer layer (5) is provided between the waveguides (1, 2; W6, W7) and the coating (4; B1, B2).

4. Apparatus according to one of Claims 1 to 3, characterized in that the waveguides (W1 to W7) are routed in straight lines.

5. Apparatus according to one of Claims 1 to 4, characterized in that the coating (B1, B2) is composed of metal.

6. Apparatus according to one of Claims 1 to 5, characterized in that the waveguides (W1 to W7) are monolithically integrated using III/V semiconductor technology, in particular InP/InGaAsP technology.

7. Polarisation diversity receiver for optical heterodyne reception having an apparatus with two optical inputs and four optical outputs which are used for combining two optical input signals in a coupler and for splitting the two resultant signals into their components with orthogonal polarisation in two polarisation splitters, the polarisation splitters (TETM1, TETM2) and the coupler (T1) each comprising two waveguides (W1, W2, W6, W7), and one of the waveguides (W1, W2) of the coupler (T1) in each case being used as an input waveguide for a polarisation splitter (TETM1, TETM2), and a planar waveguide (W1) of the coupler being connected to an input (E) for the optical input signal, the second waveguide (W2) of the coupler being connected to a local laser (L) and the outputs (W1, W2, W6, W7) of the apparatus respectively being connected to a photodiode (D1 to D4), and with an electrical signal processing device being connected downstream of the photodiodes (D1 to D4), characterized in that an intermediate waveguide section (W3, W4 or W5, respectively) is arranged between each of the two waveguides (W1, W2, W6, W7) of the coupler (T1) and of the polarisation splitters (TETM1, TETM2), in that the waveguides (W1, W2, W6, W7) each provide coupling only to the associated intermediate waveguide section (W3, W4, W5), in that a coupled wave in an intermediate waveguide section (W3, W4, W5) at the desired coupling frequency is synchronized in phase with the waves in the two associated waveguides (W1, W2, W6, W7), and in that the intermediate waveguide sections and the second waveguide (W6, W7) in the polarisation splitters are covered by a coating (B1, B2) of a conductive material.

8. Polarisation diversity receiver according to Claim 7, characterized in that the apparatus, the laser (L) and the photodiodes (D1 to D4) are monolithically integrated jointly on a substrate.

## Revendications

1. Dispositif à deux entrées optiques et quatre sorties optiques notamment pour la réception à diversité optique de polarisation, pour réunir deux signaux d'entrée optiques dans un coupleur et décomposer les deux signaux obtenus en leurs composants à polarisations orthogonales dans deux aiguillages de polarisation, ces aiguillages (TETM1, TETM2) et le coupleur (T1) se composant chaque fois de deux guides d'ondes (W1, W2, W6, W7) et chacun des guides d'ondes (W1, W2) du coupleur (T1) servant de guide d'ondes d'entrée d'un aiguillage de polarisation (TETM1, TETM2),
caractérisé en ce que
- chaque fois entre les deux guides d'ondes (W1, W2, W6, W7) du coupleur (T1) ou des aiguillages de polarisation (TETM1, TETM2), il y a un segment de guide d'ondes intermédiaire (W3, W4, W5),
- les guides d'ondes (W1, W2, W6, W7) ne sont couplés chaque fois qu'avec le segment de guide d'ondes correspondant (W3, W4, W5),
- une onde de couplage d'un segment de guide d'ondes intermédiaire (W3, W4, W5) pour la fréquence de couplage souhaitée, est en synchronisme de phase avec les ondes dans les deux guides d'ondes correspondants (W1, W2, W6, W7),
- les segments de guides d'ondes intermédiaires et le second guide d'ondes (W6, W7) des aiguillages de polarisation sont revêtus d'un revêtement (B1, B2) en matière conductrice.

2. Dispositif selon la revendication 1,
caractérisé en ce que
les segments de guides d'ondes intermédiaires (W4, W5) des aiguillages de polarisation ainsi que chaque fois un autre guide d'ondes (W6, W7) et la zone intermédiaire sont revêtus d'un revêtement (B1, B2) en un matériau conducteur.

3. Dispositif selon l'une des revendications 1 ou 2,
caractérisé en ce qu'
entre les guides d'ondes (1, 2 ; W6, W7) et le revêtement (4 ; B1, B2), il est prévu une couche tampon (5).

4. Dispositif selon l'une des revendications 1 à 3,
caractérisé en ce que
les guides d'ondes (W1-W7) sont rectilignes.

5. Dispositif selon l'une des revendications 1 à 4,
caractérisé en ce que
le revêtement (B1, B2) est en métal.

6. Dispositif selon l'une des revendications 1 à 5,
caractérisé en ce que
les guides d'ondes (W1-W7) sont réalisés en technique de semi-conducteurs (III/V), notamment en technique InP/InGaAsP, avec intégration monolithique.

7. Récepteur à diversité de polarisation pour la réception combinée optique, comprenant un dispositif à deux entrées optiques et quatre sorties optiques qui réunissent deux signaux d'entrée optiques dans un coupleur et décomposent les deux signaux obtenus en leur composantes à polarisations orthogonales dans deux aiguillages de polarisation,
les aiguillages de polarisation (TETM1, TETM2) et le coupleur (T1) se composant chaque fois de deux guides d'ondes (W1, W2, W6, W7) et chaque fois l'un des guides d'ondes (W1, W2) du coupleur (T1) servant de guide d'ondes d'entrée d'un aiguillage de polarisation (TETM1, TETM2), de même qu'un guide d'ondes planaire (W1) du coupleur est relié à une entrée (E) du signal d'entrée optique,
le second guide d'ondes (W2) du coupleur est relié à un laser local (L), les sorties (W1, W2, W6, W7) du dispositif étant reliées chaque fois à une photodiode (D1-D4), les photodiodes (D1-D4) étant suivies d'un circuit de traitement électrique de signal,
caractérisé en ce que
- chaque fois entre deux des guides d'ondes (W1, W2, W6, W7) du coupleur (T1) ou des aiguillages de polarisation (TETM1, TETM2, il est prévu un segment de guide d'ondes intermédiaire (W3 ou W4 ou W5),
- les guides d'ondes (W1, W2, W6, W7) n'assurant le couplage qu'avec le segment de guide d'ondes intermédiaire correspondant (W3, W4, W5),
- une onde de couplage d'un segment de guide d'ondes intermédiaire (W3, W4, W5) est, pour la fréquence couplage souhaitée, en synchronisme de phase avec les ondes dans les deux guides d'ondes correspondants (W1, W2, W6, W7),
- les segments de guides d'ondes intermédiaires et le second guide d'ondes (W6, W7) des aiguillages de polarisation sont recouverts d'un revêtement (B1, B2) en matière conductrice.

8. Récepteur à diversité de polarisation selon la revendication 7,
caractérisé en ce que
le dispositif, le laser (L) et les photodiodes (D1-D4) sont intégrés en commun de manière monolithique sur un substrat.
